# EUROPEAN PATENT APPLICATION

(11) **EP 1 477 811 A1**
(43) Date of publication of application: **17.11.2004**
(21) Application number: 03705248.7
(22) Date of filing: 17.02.2003
(51) Int. Cl.: G01N 35/02

(54) **INHIBITOR OF THE ADHESION OF METAL OXIDE-CONTAINING MATERIAL TO WASTE LIQUOR LINE OF AUTOMATIC ANALYZER**

(30) Priority: 19.02.2002 JP 2002040923
(71) Applicant: KYOWA MEDEX CO., LTD., Tokyo 104-0042 (JP)
(72) Inventor: MIYAUCHI, K, c/o Kyowa Medex Co., Ltd., Sunto-gun, Shizuoka 411-0932 (JP)
(74) Representative: Teipel, Stephan, Dr.
(86) International application number: PCT/JP2003/001671
(87) International publication number: WO 2003/071282

(57) **Abstract**

The present invention provides an inhibitor for adhesion of a metal hydroxide-containing substance to a waste liquid line of an autoanalyzer comprising a polysaccharide; a method of inhibiting adhesion of a metal hydroxide-containing substance to a waste liquid line of an autoanalyzer wherein the inhibitor is used; a reagent for measuring a biological component in a sample, which is effective for inhibiting adhesion of a metal hydroxide-containing substance to a waste liquid line, said reagent containing the said inhibitor; and a method for measuring a biological component in a sample wherein the reagent for measuring a biological component is used.

## Description

### Technical Field

The present invention relates to an inhibitor for adhesion of a metal hydroxide-containing substance to a waste liquid line of autoanalyzer, a method of inhibiting adhesion of a metal hydroxide-containing substance to a waste liquid line of autoanalyzer, a reagent for measuring a biological component in a sample and a method for measuring a biological component in a sample.

### Background Art

In clinical diagnosis, a continuous measurement of many samples using an autoanalyzer has been commonly carried out. When a biological component in a sample is measured with an autoanalyzer, a reaction cell is washed with an alkaline washing solution after the reaction of the sample with a reagent for measuring a biological component in the reaction cell. The resulting reaction solution after the reaction of the sample with the reagent for measuring a biological component and the resulting solution after washing the reaction cell with an alkaline washing solution are discarded through a waste liquid line.

When a metal ion, particularly a divalent metal ion, is contained in the reagent for measuring a biological component, however, a metal hydroxide-containing substance which is insoluble or hardly soluble in water is produced after washing with an alkaline washing solution, and the substance is adhered to a waste liquid line. Accordingly, when many samples are continuously measured using an autoanalyzer, the metal hydroxide-containing substance adhered to the waste liquid line is gradually accumulated and, as a result, the following problems arise such as pollution of the reaction cell due to dropping of the metal hydroxide-containing substance adhered to the waste liquid line into the reaction cell, pollution of the reaction cell due to overflow of the alkaline washing solution caused by accumulation of the metal hydroxide-containing substance in the waste liquid line, reduction in measurement accuracy and influence on the measurement of other items to be measured due to pollution of the reaction cell, reduced measuring efficiency resulted from interruption of the continuous measurement due to clogging of the waste liquid line caused by the metal hydroxide-containing substance, and an excessive load to the autoanalyzer, etc.

### Disclosure of the Invention

An object of the present invention is to provide an inhibitor for adhesion of a metal hydroxide-containing substance to a waste liquid line in a continuous measurement of many samples using an autoanalyzer, a method of inhibiting adhesion of a metal hydroxide-containing substance to a waste liquid line of an autoanalyzer, a reagent for measuring a biological component which is effective for inhibition of adhesion of a metal hydroxide-containing substance to a waste liquid line and a method for measuring a biological component which is effective for inhibition of adhesion of a metal hydroxide-containing substance to a waste liquid line.

The present invention relates to the following (1) to (10).
(1) An inhibitor for adhesion of a metal hydroxide-containing substance to a waste liquid line of an autoanalyzer, which comprises a polysaccharide.
(2) The inhibitor according to (1), wherein the polysaccharide is alginic acid or a salt thereof or dextran.
(3) A method of inhibiting adhesion of a metal hydroxide-containing substance to a waste liquid line of an autoanalyzer, which is characterized by using the inhibitor mentioned in (1) or (2).
(4) A reagent for measuring a biological component in a sample, which comprises the inhibitor mentioned in (1) or (2).
(5) The reagent according to (4), which comprises a divalent metal ion.
(6) The reagent according to (5), wherein the divalent metal is a divalent ion selected from the group consisting of a magnesium ion, a calcium ion, a cobalt ion and a manganese ion.
(7) The reagent according to any one of (4) to (6), wherein the biological component is a component which is measured by a biochemical means.
(8) The reagent according to any one of (4) to (7), wherein the reagent for measuring a biological component in the sample is a reagent used for a measuring method using an autoanalyzer.
(9) The reagent according to (8), wherein the measuring method using an autoanalyzer is a continuous measuring method of many samples.
(10) A method for measuring a biological component in a sample, which is characterized by using the reagent mentioned in any one of (4) to (9).

### Best Mode for Carrying Out the Invention

With regard to a measuring method using an autoanalyzer according to the present invention, there is no particular limitation so far as it is a method which comprises a step of washing a reaction cell with an alkaline washing solution, although a continuous measuring method of many samples is preferred. An example of the measuring method using an autoanalyzer according to the present invention includes a method comprising:
(1) a step of adding a sample and a reagent for measuring a biological component to a reaction cell,
(2) a step of reacting the sample with the reagent for measuring a biological component,
(3) a step of measuring a detectable substance produced in the step (2) and
(4) a step of washing the reaction cell with an alkaline washing solution.

The step of washing the reaction cell with an alkaline washing solution includes a step of adding an alkaline washing solution to a reaction cell and a step of removing the resulting solution after washing with the alkaline washing solution (hereinafter, referred to as a reaction solution-containing alkaline washing solution) through a waste liquid line. Each of the steps is not always a completely independent. For example, when the reagent for measuring a biological component is in a form of a kit comprising two reagents (first reagent and second reagent), the second reagent may be added after the reaction of the sample with the first reagent.

In a continuous measuring method of samples using an autoanalyzer, after the reaction of the sample with the reagent for measuring a biological component, the reaction solution in a reaction cell is discarded through a waste liquid line. Then, an alkaline washing solution is added to the reaction cell, and, after washing, the reaction solution-containing alkaline washing solution resulting from the washing of the cell is discarded through the waste liquid line. The waste liquid line comprises a nozzle which sucks a reaction solution in the reaction cell and a reaction solution-containing alkaline washing solution in the reaction cell, and a waste liquid tube connecting to the nozzle. With regard to the alkaline washing solution, there is no particular limitation so far as the solution is an alkaline washing solution which washes a reaction cell of an autoanalyzer, and examples thereof include aqueous solutions containing alkali such as lithium hydroxide, sodium hydroxide and potassium hydroxide. Although there is no particular limitation to the concentration of the alkali in an alkaline washing solution, and the concentration is, for example, 0.1 to 5.0 mol/L. The alkaline washing solution may contain a detergent, etc. if necessary. Examples of the detergent include cationic detergent, anionic detergent, amphoteric detergent and nonionic detergent.

The autoanalyzer used in the continuous measuring method of many samples may be an autoanalyzer in which a waste liquid line for discarding the reaction solution after the reaction of the sample with the reagent for measuring a biological component in the reaction cell and a waste liquid line for discarding the reaction solution-containing alkaline washing solution are the same or different. Examples of the autoanalyzer in which a waste liquid line for discarding the reaction solution after the reaction of the sample with the reagent for measuring a biological component in the reaction cell and a waste liquid line used to discard the reaction solution-containing alkali washing solution are the same include Hitachi automatic analyzer 7250, Hitachi automatic analyzer 7600 and Hitachi automatic analyzer 7170. In a continuous measurement of many samples using an autoanalyzer in which both waste liquid lines are the same one, a reaction solution and a reaction solution-containing alkaline washing solution alternately pass through the waste liquid line. In other words, after a reaction solution passes through the waste liquid line, passing of a reaction solution-containing alkaline washing solution on the waste liquid line where the reaction solution remains and passing of the reaction solution on the waste liquid line where the reaction solution-containing alkaline washing solution remains are repeated alternately.

In the present invention, the metal hydroxide-containing substance may be anything so far as it is a substance containing a metal hydroxide which is insoluble or hardly soluble in water and causes adhesion to the waste liquid line, and the examples include an alkaline earth metal hydroxide such as magnesium hydroxide, calcium hydroxide, cobalt hydroxide and manganese hydroxide and a complex of such an alkaline earth metal hydroxide with an organic or inorganic substance in the reagent for measuring a biological component.

Examples of the polysaccharide used as an inhibitor for adhesion according to the present invention include cyclodextrin, pullulan, dextran, alginic acid or a salt thereof and dextran sulfate or a salt thereof, and preferable are dextran, alginic acid or a salt thereof. Examples of the dextran include dextrans having a molecular weight of 200,000, 500,000 and 2,000,000. Examples of the salt of alginic acid and the salt of dextran sulfate include lithium salt, sodium salt, potassium salt and ammonium salt.

Although the inhibitor for adhesion according to the present invention *per se* can be used as a reagent, it can be used by being contained in a reagent for measuring a biological component or in an alkaline washing solution. When the inhibitor for adhesion according to the present invention per se is used as a reagent, there is no particular limitation to the amount of the polysaccharide in the reagent so far as it is an amount with which adhesion of the metal hydroxide-containing substance onto the waste liquid line is suppressed, and the amount is, for example, 0.5 to 20 g/L or, preferably, 1 to 10 g/L in the reaction solution.

When the inhibitor for adhesion according to the present invention is contained in a reagent for measuring a biological component, there is no particular limitation to the amount of the polysaccharide in the reagent for measuring a biological component so far as it does not affect the measurement of the biological component and adhesion of the metal hydroxide-containing substance to the waste liquid line of an autoanalyzer is suppressed, and the amount is, for example, 0.5 to 20 g/L or, preferably, 1 to 10 g/L in the reaction solution.

When the inhibitor for adhesion according to the present invention is contained in an alkaline washing solution, there is no particular limitation to the amount of the polysaccharide in the alkaline washing solution so far as adhesion of the metal hydroxide-containing substance to the waste liquid line of an autoanalyzer is suppressed, and the amount is, for example, 0.5 to 20 g/L or, preferably, 1 to 10 g/L in the reaction solution.

The reagent for measuring a biological component according to the present invention contains the inhibitor for adhesion according to the present invention and a substance which is necessary to measure the biological component in the sample. When the reagent for measuring a biological component contains a divalent metal ion, the inhibitor for adhesion according to the present invention is effective for inhibition of adhesion of a metal hydroxide-containing substance to a waste liquid line. Thus, when the reagent for measuring a biological component according to the present invention is used, adhesion of a metal hydroxide-containing substance formed in the waste liquid line during the reaction of the reaction solution with the alkaline washing liquid containing the reaction solution to a waste liquid line can be inhibited even in a continuous measurement of many samples. Examples of the divalent metal ion include a magnesium ion, a calcium ion, a cobalt ion and a manganese ion. There is no particular limitation to the amount of the divalent metal ion in the reagent for measuring a biological component, and it is, for example, 0.5 to 5 g/L in the reaction solution.

The form for presence and preservation of the reagent for measuring a biological component according to the present invention may be either in a freeze-dried state or in a state of an aqueous solution, and it may be either in a form of one-reagent system or in a form of a kit comprising two or more reagents.

Examples of the sample which can be measured for the biological components therein using the reagent for measuring a biological component according to the present invention include total blood, plasma, serum, cerebrospinal fluid, saliva, amniotic fluid, urine, sweat and pancreatic juice. Examples of the biological components which can be measured using the reagent for measuring a biological component according to the present invention include components which are determined by a biochemical means, components which are measured by an immunological means and components which are measured by a genetic means, and a preferable one is components measured by a biochemical means. Examples of the components measured by a biochemical means include a biological component measured using an enzymatic reaction. More specific examples include glucose, 1,5-anhydroglucitol, fucose, urea, uric acid, ammonia, creatinine, total cholesterol, free cholesterol, cholesterol in high-density lipoprotein (HDL-C), cholesterol in low-density lipoprotein (LDL-C), cholesterol in very-low-density lipoprotein (VLDL-C), cholesterol in remnant-like lipoprotein (RLP-C), triglyceride, phospholipid, total protein, albumin, globulin, bilirubin, bile acid, sialic acid, lactic acid, pyruvic acid, free fatty acid, ceruloplasmin, alanine aminotransferase (ALT), aspartate aminotransferase (AST), creatine phosphokinase (CPK), phosphokinase (PK), amylase, lipase, choline esterase, γ-glutamyl transpeptidase, leucine aminopeptidase, L-lactate dehydrogenase (LDH), aldolase, alkaline phosphatase, acid phosphatase, N-acetylglucosaminidase, guanase and monoamine oxidase.

Examples of the components measured using an immunological means include biological components measured by an antigen-antibody reaction. More specific examples include IgG, IgM, IgA, IgE, apoprotein AI, apoprotein AII, apoprotein B, apoprotein E, rheumatoid factor, D-dimer, oxidized LDL, glycoalbumin, T3, T4, drugs such as an antiepileptic drug, α-fetoprotein (AFP), carcinoembryonic antigen (CEA), CA19-9, CA125, human chorionic gonadotropin (hCG), insulin, C-peptide, estrogen, anti-GAD antibody, pepsinogen, HB antigen, anti-HB antibody, HCV antigen, anti-HCV antibody, HTLV-I antigen, anti-HTLV-I antibody, HIV antibody, tuberculosis antibody, mycoplasma antibody and hemoglobin Alc. Examples of the components measured by a genetic means include biological components measured by hybridization. More specific examples include DNA, RNA, peptide nucleic acid.

When a biological component is converted into a detectable substance, or a detectable substance is generated from a biological component by the reagent for measuring a biological component according to the present invention, the biological component can be measured by measuring the detectable substance. Examples of the detectable substance include dye, NAD(P)H, fluorescence and luminescence.

As a substance which converts a biological component into dye, as well as a substance which by itself converts a biological component into dye, a combination of plural substances may be used and the examples include a combination of a substance which converts a biological component into hydrogen peroxide and a substance which converts the said hydrogen peroxide into dye and a combination of a substance which converts a biological component into NAD(P)H and a substance which converts the said NAD(P)H into dye.

As a substance which forms dye from a biological component, a substance which by itself forms dye may be used, and a combination of plural substances may be used, and the examples include an enzyme substrate which generates dye by action of an enzyme in the biological component, a combination of a substance which generates hydrogen peroxide from a biological component and a substance which converts the hydrogen peroxide into dye and a combination of a substance which generates NAD(P)H from the biological component and a substance which converts the said NAD(P)H into dye.

As a substance which converts a biological component into hydrogen peroxide, an oxidase for the component is mentioned, and when an oxidase for the component is not available, a combination of a substance which converts the component into a substance in which the corresponding oxidase is present, and a substance comprising the oxidase, etc. may be used. With regard to a combination of a biological component and a substance which converts the biological component into hydrogen peroxide, the following combinations may be exemplified.
· choline: choline oxidase,
· cholesterol: cholesterol oxidase,
· uric acid: uricase,
· triglyceride: lipoprotein lipase and glycerol oxidase,
· free fatty acid: acyl CoA synthetase and acyl CoA oxidase,
· glucose: pyranose oxidase,
· phospholipid: phospholipase D and choline oxidase,
· creatine: creatinase and sarcosine oxidase,
· creatinine: creatininase, creatinase and sarcosine oxidase,
· lactic acid: lactate oxidase,
· inorganic phosphorus: purine nucleoside phosphorylase and xanthine oxidase,
· o-toluoylcholine: choline esterase and choline oxidase,
· monoamine (allylamine, etc.): monoamine oxidase.

As a substance which converts hydrogen peroxide into dye, a combination of a peroxidative substance such as peroxidase and an oxidative coloring type of chromogen, etc. may be used. Examples of the oxidative coloring type of chromogen include a leuco type chromogen, an oxidative coupling coloring type of chromogen, etc.

A leuco type of chromogen is a substance which is converted into dye by itself in the presence of hydrogen peroxide and a peroxidative substance such as peroxidase, and the examples include 10-N-carboxymethylcarbamoyl-3,7-bis(dimethylamino)-10H-phenothiazine (CCAP), 10-N-methylcarbamoyl-3,7-bis(dimethylamino)-10H-phenothiazine (MCDP), N-(carboxymethylaminocarbonyl)-4,4'-bis(dimethylamino)diphenylamine sodium salt (DA-64), 4,4'-bis(dimethylamino)diphenylamine and bis[3-bis(4-chlorophenyl)methyl-4-dimethylaminophenyl]amine (BCMA).

An oxidative coupling coloring type of chromogen is a substance which forms dye by oxidative coupling of two compounds in the presence of hydrogen peroxide and a peroxidative substance such as peroxidase. Examples of the combination of two compounds include a combination of a coupler and an aniline compound, and a combination of a coupler and a phenol compound. Examples of the coupler include 4-aminoantipyrine (4-AA), and 3-methyl-2-benzothiazolinone hydrazine. Examples of the aniline compound include N-ethyl-N-(3-methylphenyl)-N'-succinyl ethylenediamine (EMSE), N-(3,5-dimethoxyphenyl)-N'-succinyl ethylenediamine sodium salt (DOSE), N-ethyl-N-(2-hydroxy-3-sulfopropyl)-m-toluidine, N-ethyl-N-sulfopropylaniline, N-ethyl-N-sulfopropyl-3,5-dimethoxyaniline, N-sulfopropyl-3,5-dimethoxyaniline, N-ethyl-N-sulfopropyl-3,5-dimethylaniline, N-ethyl-N-sulfopropyl-m-toluidine, N-ethyl-N-(2-hydroxy-3-sulfopropyl)-m-anisidine, N-ethyl-N-(2-hydroxy-3-sulfopropyl)-aniline, N-ethyl-N-(2-hydroxy-3-sulfopropyl)-3-methylaniline sodium salt dihydrate (TOOS), N-ethyl-N-(2-hydroxy-3-sulfopropyl)-3,5-dimethoxyaniline, N-(2-hydroxy-3-sulfopropyl)-3,5-dimethoxyaniline sodium salt (HSDA), N-ethyl-N-(2-hydroxy-3-sulfoproyl)-3,5-dimethylaniline, N-sulfopropylaniline, N-ethyl-N-sulfopropylaniline, propyl-m-anidine and N-ethyl-N-(2-hydroxy-3-sulfopropyl)-4-fluoro-3,5-dimethoxyaniline sodium salt (F-DAOS). Examples of the phenol compound include phenol and 3-hydroxy-2,4,6-triiodobenzoic acid.

As a substance which converts a biological component into an NAD(P)H, dehydrogenase for the biological component may be mentioned, and when dehydrogenase of the biological component is not available, a combination of a substance which converts the biological component into a substance in which the corresponding dehydrogenase is present and a substance comprising the dehydrogenase, etc. may be used. As a combination of a biological component and a substance which converts the biological component into NAD(P)H, the following combinations may be exemplified.
· Glucose: glucokinase, adenosine triphosphate, glucose-6-phosphate dehydrogenase and NAD(P)⁺,
· 1,5-Anhydroglucitol: hexokinase or glucokinase, adenosine diphosphate or adenosine triphosphate, 1,5-anhydroglucitol-6-phosphate dehydrogenase and NAD(P)⁺.

As substance which converts NAD(P)H into dye, a reductive coloring type of chromogen, etc. is mentioned. Examples of the chromogen of a reductive coloration type include 3-(4,5-dimethyl-2-thiazolyl)-2,5-diphenyl-2H-tetrazolium bromide (MTT), 2-(4-iodophenyl)-3-(4-nitrophenyl)-5-(2,4-disulfophenyl)-2H-tetrazolium monosodium salt (WST-1) and 2-(4-iodophenyl)-3-(2,4-dinitrophenyl)-5-(2,4-disulfophenyl)-2H-tetrazolium monosodium salt (WST-3).

As the enzyme substrate which forms dye by the action of an enzyme, mentioned is 4-nitrophenyl β-D-galactosyl-α-maltopentaoside which produces 4-nitrophenol by the action of α-amylase, etc.

As a substance which generates hydrogen peroxide from a biological component, a substrate of oxidase may be mentioned when the biological component is oxidase, and when the biological component is an enzyme which is other than oxidase, mentioned is a combination of a substrate for enzyme, a substance which converts a substance produced by the reaction of the enzyme with the substrate into a substance in which the corresponding oxidase is present, and a substance comprising the oxidase. As a combination of the biological component and a substance which generates hydrogen peroxide from the biological component, the following combinations may be exemplified.
· Cholinesterase: 2,4-dimethoxybenzoylcholine and choline oxidase,
· Monoamine oxidase: allylamine.

As a substance which generates NAD(P)H from a biological component, a substrate for dehydrogenase may be mentioned when the biological component is dehydrogenase, and when the biological component is an enzyme other than dehydrogenase, mentioned is a combination of a substrate for the enzyme, a substance which converts the substance produced by the reaction of the enzyme with the substrate into a substance in which the corresponding dehydrogenase is present and a substance comprising the dehydrogenase. As a combination of the biological component and a substance which generates NAD(P)H from the biological component, the following combination may be exemplified.
· Creatine phosphokinase: creatine phosphate, adenosine diphosphate, glucose, NAD(P)⁺ and glucose-6-phosphate dehydrogenase.

When a substance which is converted from a biological component or generated from a biological component is NAD(P)⁺, the biological component can be determined by measuring the decrease of NAD(P)H. When the decrease of NAD(P)H is measured, the reagent for measuring a biological component according to the present invention contains NAD(P)H instead of NAD(P)⁺.

When a substance which is converted from a biological component or generated from a biological component is fluorescence, a substance which is contained in the reagent for measuring a biological component according to the present invention and which converts the biological component into fluorescence or generates fluorescence from the biological component, a substance which by itself converts into fluorescence or a substance which by itself generates fluorescence may be used, and a combination of plural substances may be used. Examples of the substance which converts a biological component into fluorescence or generates fluorescence from a biological component include a combination of a substance which converts the biological component into hydrogen peroxide and a substance which generates fluorescence from the hydrogen peroxide, a combination of a substance which generates hydrogen peroxide from a biological component and a substance which generates fluorescence from the hydrogen peroxide, etc.

Examples of the substance which converts a biological component into hydrogen peroxide include the above-mentioned substance which converts a biological component into hydrogen peroxide, etc. Examples of the substance which generates hydrogen peroxide from a biological component include the above-mentioned substance which generates hydrogen peroxide from a biological component etc. Examples of the substance which generates fluorescence from hydrogen peroxide include a combination of a peroxidative substance such as peroxidase and a fluorescent substance, etc. Examples of the fluorescent substance include 4-hydroxyphenylacetic acid, 3-(4-hydroxphenyl)propionic acid, coumarin, etc.

When a substance which is converted from a biological component or generated from a biological component is luminescence, as a substance which is contained in the reagent for measuring biological component according to the present invention and which converts the biological component into luminescence or a substance which generates luminescence from the biological component, a substance which by itself converts into luminescence or a substance which by itself generates luminescence may be used, and a combination of plural substances may be used. Examples of the substance which converts a biological component into luminescence or generates luminescence from a biological component include a combination of a substance which converts the biological component into hydrogen peroxide and a substance which generates luminescence from the hydrogen peroxide, a combination of a substance which generates hydrogen peroxide from the biological component and a substance which generates luminescence from the hydrogen peroxide, etc.

Examples of the substance which converts a biological component into hydrogen peroxide include the above-mentioned substance which converts a biological component into hydrogen peroxide, etc. Examples of the substance which generates hydrogen peroxide from a biological component include the above-mentioned substance which generates hydrogen peroxide from a biological component, etc. As the substance which generates luminescence from hydrogen peroxide, a chemiluminescent substance is mentioned. Examples of the chemiluminescent substance include luminol, isoluminol, lucigenin and acridinium ester.

The reagent for measuring a biological component according to the present invention may, if necessary, contain buffer, detergent, antiseptic, agent for elimination of affecting substances, etc. Examples of the buffer include those with pH from 1 to 11 such as lactate buffer, citrate buffer, acetate buffer, succinate buffer, phthalate buffer, phosphate buffer, triethanolamine buffer, diethanolamine buffer, lysine buffer, barbiturate buffer, tris(hydroxymethyl)aminomethane buffer, imidazole buffer, malate buffer, oxalate buffer, glycine buffer, borate buffer, carbonate buffer, glycine buffer and Good's buffer. Examples of Good's buffer include 2-morpholinoethanesulfonic acid (MES), bis(2-hydroxyethyl)-iminotris(hydroxymethyl)methane (Bis-Tris), N-(2-acetamido)-iminodiacetic acid (ADA), piperazine-N,N'-bis(2-ethanesulfonic acid) (PIPES), N-(2-acetamido)-2-aminoethanesulfonic acid (ACES), 3-morpholino-2-hydroxypropanesulfonic acid (MOPSO), N,N-bis(2-hydroxyethyl)-2-aminoethanesulfonic acid (BES), 3-morpholinopropanesulfonic acid (MOPS), N-[tris(hydroxymethyl)methyl]-2-aminoethanesulfonic acid (TES), 2-[4-(2-hydroxyethyl)-1-piperazinyl]ethanesulfonic acid (HEPES), 3-[N,N-bis(2-hydroxyethyl)amino]-2-hydroxypropanesulfonic acid (DIPSO), N-[tris(hydroxymethyl)methyl]-2-hydroxy-3-aminopropanesulfonic acid (TAPSO), piperazine-N,N'-bis(2-hydroxypropanesulfonic acid) (POPSO), 3-[4-(2-hydroxyethyl)-1-piperazinyl]-2-hydroxypropanesulfonic acid (HEPPSO), 3-[4-(2-hydroxyethyl)-1-piperazinyl]propanesulfonic acid [(H)EPPS], N-[tris(hydroxymethyl)methyl]-glycine (Tricine), N,N-bis(2-hydroxyethyl)glycine (Bicine), N-tris(hydroxymethyl)methyl-3-aminopropanesulfonic acid (TAPS), N-cyclohexyl-2-aminoethanesulfonic acid (CHES), N-cyclohexyl-3-amino-2-hydroxypropanesulfonic acid (CAPSO) and N-cyclohexyl-3-aminopropanesulfonic acid (CAPS).

Examples of the detergent include cationic detergent, anionic detergent, amphoteric detergent and nonionic detergent. Examples of the antiseptic include sodium azide and antibiotics. As the agent for elimination of affecting substances, potassium ferrocyanide, ferrocene compound, etc. are mentioned for eliminating the affection by bilirubin, and ascorbic acid oxidase, etc. are mentioned for eliminating the affection by ascorbic acid.

With regard to a method for measuring a biological component in a sample using the reagent for measuring a biological component according to the present invention, there is no particular limitation so far as it is a method for measuring a detectable substance produced by the reaction of the sample with the reagent for measuring a biological component, and the examples include absorptiometry, fluorometry and emission spectrometry. Also, an endpoint method or a rate method may be mentioned as the method for measuring a biological component in a sample using the reagent for measuring a biological component according to the present invention.

As an absorptiometry, mentioned is a method where absorption of dye such as NAD(P)H produced by the reaction of the sample with the reagent for measuring a biological component is measured by a spectrophotometer. As a method for production of dye by the reaction of the sample with the reagent for measuring a biological component, mentioned are a method where hydrogen peroxide which is converted from the biological component in the sample or generated from the biological component in the sample is converted into dye by the above-mentioned oxidative coloring type of chromogen in the presence of a peroxidative substance such as peroxidase and a method where NAD(P)H converted from the biological component or NAD(P)H generated from the biological component in the sample is converted to dye by the above-mentioned reductive coloring type of chromogen in the presence of diaphorase and an electron carrier such as 1-methoxy-5-methylphenazium methylsulfate.

As a fluorometry, mentioned is a method where fluorescence produced by the reaction of the sample with the reagent for measuring a biological component is measured by a fluorophotometer. As a method for production of fluorescence by the reaction of the sample with the reagent for measuring a biological component, mentioned is a method where fluorescence is generated by the reaction of the above-mentioned fluorescent substance with hydrogen peroxide converted from the biological component in the sample or hydrogen peroxide generated from the biological component in the sample in the presence of peroxidative substance such as peroxidase.

As an emission spectrometry, mentioned is a method where luminescence produced by the reaction of the sample with the reagent for measuring a biological component is measured by a luminometer. As a method for production of luminescence by the reaction of the sample with the reagent for measuring a biological component, mentioned is a method where luminescence is generated by the reaction of hydrogen peroxide converted from the biological component in the sample or generated from the biological component in the sample with the above-mentioned chemiluminescent substance.

Examples of the present invention will be shown below, although the present invention is not limited thereto. The reagents and enzymes used here are those of the following manufacturers.

PIPES reagent (manufactured by Dojindo Laboratories), MOPS buffer (Dojindo Laboratories), Triton X-100 (manufactured by Sigma), magnesium sulfate heptahydrate (manufactured by Wako Pure Chemical Industries), TOOS (manufactured by Dojindo Laboratories), 4-AA (manufactured by Kanto Kagaku), ATP disodium salt (manufactured by Kyowa Hakko Kogyo), sodium azide (manufactured by Wako Pure Chemical Industries), sodium dextransulfate (manufactured by Fluka), sodium cholate (manufactured by Tokyo Kasei), sodium alginate (manufactured by Fuji Chemical Industry), dextran (molecular weight: 500,000) (manufactured by Pharmacia), glycerol kinase (manufactured by Asahi Kasei), glycerol-3-phosphate oxidase (manufactured by Asahi Kasei), lipoprotein lipase (manufactured by Toyobo), ascorbate oxidase (manufactured by Asahi Kasei), modified lipoprotein lipase (manufactured by Toyobo), peroxidase (manufactured by Toyobo) and modified cholesterol oxidase (manufactured by Kyowa Hakko Kogyo).

### Examples

### Example 1. Reagent for measuring triglyceride

Reagent for measuring triglyceride was prepared according to the following compositions.

| (First Reagent) | |
|---|---|
| PIPES buffer (pH 7.4) | 9 g/L |
| Triton X-100 | 0.2% |
| Magnesium sulfate heptahydrate | 2 g/L |
| TOOS | 0.3 g/L |
| ATP disodium salt | 2.5 g/L |
| Glycerol kinase | 1 kU/L |
| Glycerol-3-phosphate oxidase | 8 kU/L |
| Peroxidase | 10 kU/L |
| Sodium alginate | 1.5 g/L |

| (Second Reagent) | |
|---|---|
| PIPES buffer (pH 6.8) | 9 g/L |
| Triton X-100 | 0.2% |
| 4-AA | 0.5 g/L |
| Lipoprotein lipase | 3 kU/L |
| Peroxidase | 10 kU/L |

### Example 2. Reagent for measuring triglyceride

Reagent for measuring triglyceride was prepared according to the following compositions.

| (First Reagent) | |
|---|---|
| PIPES buffer (pH 7.4) | 9 g/L |
| Triton X-100 | 0.2% |
| Magnesium sulfate heptahydrate | 2 g/L |
| TOOS | 0.3 g/L |
| ATP disodium salt | 2.5 g/L |
| Glycerol kinase | 1 kU/L |
| Glycerol-3-phosphate oxidase | 8 kU/L |
| Peroxidase | 10 kU/L |
| Dextran (molecular weight: 500,000) | 5 g/L |

| (Second Reagent) | |
|---|---|
| PIPES buffer (pH 6.8) | 9 g/L |
| Triton X-100 | 0.2% |
| 4-AA | 0.5 g/L |
| Lipoprotein lipase | 3 kU/L |
| Peroxidase | 10 kU/L |

### Comparative Example 1. Reagent for measuring triglyceride

Reagent for measuring triglyceride containing no inhibitor for adhesion of the present invention was prepared according to the following compositions.

| (First Reagent) | |
|---|---|
| PIPES buffer (pH 7.4) | 9 g/L |
| Triton X-100 | 0.2% |
| Magnesium sulfate heptahydrate | 2 g/L |
| TOOS | 0.3 g/L |
| ATP disodium salt | 2.5 g/L |
| Glycerol kinase | 1 kU/L |
| Glycerol-3-phosphate oxidase | 8 kU/L |
| Peroxidase | 10 kU/L |

| (Second Reagent) | |
|---|---|
| PIPES buffer (pH 6.8) | 9 g/L |
| Triton X-100 | 0.2% |
| 4-AA | 0.5 g/L |
| Lipoprotein lipase | 3 kU/L |
| Peroxidase | 10 kU/L |

### Test Example 1. Continuous measurement of triglyceride in a sample with an autoanalyzer (Hitachi 7250)

A continuous measurement of triglyceride in a sample was carried out using Hitachi automatic analyzer 7250. In the continuous measurement, the reagent of Example 1 was set in the first channel while the reagent of Comparative Example 1 was set in the second channel, and then a continuous measurement of the sample was conducted.

A series of operations for one sample from the measurement of triglyceride in the sample to washing of the reaction cell were carried out as follows. Namely, the sample (5 µL) and the first reagent (240 µL) were added to the reaction cell, and the mixture was heated at 37°C for 5 minutes, the second reagent (80 µL) was added thereto, and the mixture was heated at 37°C for 5 minutes. The absorbance of the resulting reaction solution was measured under the condition that the photometric points were 16-34 and main wavelength/subwavelength was 546 nm/700 nm. After the determination, the reaction solution in the reaction cell was discarded through a waste liquid line, and then an alkaline washing solution (Hitachi High Alkali) containing sodium hydroxide as a main ingredient was added to wash the reaction cell, and the reaction solution-containing alkaline washing solution was discarded through the same waste liquid line as above. A series of these operations were repeatedly carried out for each sample in a continuous manner. Next, the condition of the waste liquid line used for the continuous measurement when the reagent of Example 1 in the channel 1 was used was compared with that when the reagent of Comparative Example 1 of the channel 2 was used. The result showed that a continuous measurement of about 12,000 samples clogged the waste liquid line and disrupted the continuous measurement when the reagent of Comparative Example 1 was used, while a continuous measurement of even 20,000 or more samples did not clog the waste liquid line when the reagent of Example 1 was used.

### Test Example 2. Continuous measurement of triglyceride in a sample with an autoanalyzer (Hitachi 7250)

A continuous measurement of triglyceride in a sample was carried out by the same operations as those described in Test Example 1, except that the reagent of Example 2 was used instead of the reagent of Example 1. The result showed that a continuous measurement of about 12,000 samples clogged the waste liquid line and disrupted the continuous measurement when the reagent of Comparative Example 1 was used, while a continuous measurement of even 20,000 or more samples did not clog the waste liquid line when the reagent of Example 2 was used.

### Example 3. Reagent for measuring cholesterol in HDL (HDL-C)

Reagent for measuring cholesterol in HDL (HDL-C) was prepared according to the following compositions.

| (First Reagent) | |
|---|---|
| MOPS buffer (pH 7.0) | 4 g/L |
| Sodium dextransulfate | 0.5 g/L |
| Magnesium sulfate heptahydrate | 2 g/L |
| TOOS | 0.3 g/L |
| Sodium azide | 0.2 g/L |
| Peroxidase | 5 kU/L |
| Ascorbate oxidase | 1 kU/L |
| Sodium alginate | 2 g/L |

| (Second Reagent) | |
|---|---|
| MOPS (pH 7.0) | 4 g/L |
| 4-AA | 0.5 g/L |
| Sodium cholate | 4 g/L |
| Sodium azide | 0.2 g/L |
| Peroxidase | 10 kU/L |
| Modified lipoprotein lipase | 1 kU/L |
| Modified cholesterol oxidase | 7 kU/L |

### Comparative Example 2. Reagent for measuring cholesterol in HDL (HDL-C)

Reagent for measuring cholesterol in HDL (HDL-C) containing no inhibitor for adhesion of the present invention was prepared according to the following compositions.

| (First Reagent) | |
|---|---|
| MOPS buffer (pH 7.0) | 4 g/L |
| Sodium dextransulfate | 0.5 g/L |
| Magnesium sulfate heptahydrate | 2 g/L |
| TOOS | 0.3 g/L |
| Sodium azide | 0.2 g/L |
| Peroxidase | 5 kU/L |
| Ascorbate oxidase | 1 kU/L |

| (Second Reagent) | |
|---|---|
| MOPS (pH 7.0) | 4 g/L |
| 4-AA | 0.5 g/L |
| Sodium cholate | 4 g/L |
| Sodium azide | 0.2 g/L |
| Peroxidase | 10 kU/L |
| Modified lipoprotein lipase | 1 kU/L |
| Modified cholesterol oxidase | 7 kU/L |

### Test Example 3. Continuous measurement of HDL-C in a sample with an autoanalyzer (Hitachi 7250)

A continuous measurement of HDL-C in a sample was carried out by the same operations as those described in Test Example 1, except that the reagent of Example 3 was used instead of the reagent of Example 1 and that the reagent of Comparative Example 2 was used instead of the reagent of Comparative Example 1. The result showed that a continuous measurement of about 5,000 samples clogged the waste liquid line and disrupted the continuous measurement when the reagent of Comparative Example 2 was used, while a continuous measurement of even 20,000 or more samples did not clog the waste liquid line when the reagent of Example 3 was used.

### Industrial Applicability

In accordance with the present invention, adhesion of a metal hydroxide-containing substance to a waste liquid line in a measurement using an autoanalyzer can be inhibited. Accordingly, pollution of the reaction cell and interruption of the continuous measurement do not occur. As a result, reduction in measurement accuracy and influence on the measurement of other measuring items are suppressed, measuring efficiency is improved and an excessive load to an autoanalyzer is reduced.

## Claims

1. An inhibitor for adhesion of a metal hydroxide-containing substance to a waste liquid line of an autoanalyzer which comprises a polysaccharide.

2. The inhibitor according to claim 1, wherein the polysaccharide is alginic acid or a salt thereof or dextran.

3. A method of inhibiting adhesion of a metal hydroxide-containing substance to a waste liquid line of an autoanalyzer, which is **characterized by** using the inhibitor according to claim 1 or 2.

4. A reagent for measuring a biological component in a sample, which comprises the inhibitor according to claim 1 or 2.

5. The reagent according to claim 4, which comprises a divalent metal ion.

6. The reagent according to claim 5, wherein the divalent metal is a divalent ion selected from the group consisting of a magnesium ion, a calcium ion, a cobalt ion and a manganese ion.

7. The reagent according to any one of claims 4 to 6, wherein the biological component is a component which is measured by a biochemical means.

8. The reagent according to any one of claims 4 to 7, wherein the reagent for measuring a biological component in the sample is a reagent used for a measuring method using an autoanalyzer.

9. The reagent according to claim 8, wherein the measuring method using an autoanalyzer is a continuous measuring method of many samples.

10. A method for measuring a biological component in a sample, which is **characterized by** using the reagent according to any one of claim 4 to 9.
